# EUROPÄISCHE PATENTSCHRIFT

(11) **EP 2 825 740 B1**
(45) Veröffentlichungstag und Bekanntmachung des Hinweises auf die Patenterteilung: **04.10.2017**
(21) Anmeldenummer: 13702778.5
(22) Anmeldetag: 28.01.2013
(51) Int. Cl.: F01N 3/08, F01N 3/20, F01N 3/36

(54) **DOSIERVORRICHTUNG**
DOSING DEVICE
DISPOSITIF DE DOSAGE

(30) Priorität: 15.03.2012 DE 102012204107
(43) Veröffentlichungstag der Anmeldung: 21.01.2015
(73) Patentinhaber: Robert Bosch GmbH, 70442 Stuttgart (DE)
(72) Erfinder: BURGER, Matthias, 71711 Murr (DE)
(86) Internationale Anmeldenummer: PCT/EP2013/051537
(87) Internationale Veröffentlichungsnummer: WO 2013/135413

(56) Entgegenhaltungen:
- WO-A1-02/092998
- DE-A1- 10 341 996
- DE-A1-102008 010 106
- DE-A1-102009 032 487
- DE-A1-102010 028 979
- DE-A1-102010 030 343
- US-A1- 2004 237 930

## Beschreibung

Die vorliegende Erfindung betrifft eine Abgasnachbehandlungseinrichtung mit einer Dosiervorrichtung zum Einbringen eines flüssigen Mediums in einen Abgasstrom einer Brennkraftmaschine eines Kraftfahrzeugs nach dem Oberbegriff des Anspruchs 1.

### Stand der Technik

Für Brennkraftmaschinen ist die Einhaltung von Grenzwerten der Schadstoffemissionen im Abgas gesetzlich gefordert. Insbesondere bei einem Dieselfahrzeug ist eine Stickoxid-Reduzierung zwingend erforderlich. Eine Möglichkeit der Stickoxid-Reduzierung ist bspw. das bekannte Verfahren einer selektiven katalytischen Reduktion (SCR). Bei diesem System wird ein flüssiges Reduktionsmittel, z.B. eine Harnstoffwasserlösung, in den Abgasstrom im Abgasrohr eingebracht. Mit dem heißen Abgas entwickelt sich aus der Harnstoffwasserlösung Ammoniakgas, mit dem das gesundheitsschädliche Stickoxid zu unschädlichem Wasser und Stickstoff reduziert wird.

Aus der DE 10 2010 28 866 A1 ist eine Vorrichtung zum Einbringen der Harnstoffwasserlösung in den Abgasstrom bekannt. Die Harnstoffwasserlösung wird mittels einer elektrisch angetriebenen Pumpe unter Druck gesetzt. Die eigentliche Einspritzung wird über die elektrische Ansteuerung eines Dosierventils gesteuert. Aufgrund der elektrischen Aktorik muss das Dosierventil in der Regel gekühlt werden. Bei diesem System ist in aller Regel ein Gasmischer erforderlich, um eine homogene Verteilung der Harnstoffwasserlösung zu gewährleisten.

Eine aus der nachveröffentlichten DE 10 2011 078 850 A1 bekannte Dosiervorrichtuni ist druckwellengesteuert. Eine Ventilnadel eines Dosierventils wird mit einem Federhalter zugehalten und öffnet ab einem gewissen hydraulischen Druck von selbst Die Einspritzung wird somit über die Druckwelle gesteuert, die mit Hilfe einer Pumpe erzeugt wird. Die Zumessgenauigkeit dieses Systems ist nicht besonders hoch, da die Einspritzmenge von einem zeitlichen Verlauf der Druckwelle abhängt und diese Druckwellenform von äußeren Einflüssen beeinflusst wird.

Die DE 10 2010 030 343 beschreibt eine Vorrichtung zur Einbringung eines Kraftstoffs in einem Abgasstrang einer Brennkraftmaschine.

Die DE 10 2010 028 979 offenbart eine Dosiervorrichtung zum Einspritzen eines Fluids in einem Abgasstrang für die keine Kühlung erforderlich ist.

### Offenbarung der Erfindung

Die vorliegende Erfindung unterscheidet sich vom Stand der Technik durch die Merkmale des Anspruchs 1, insbesondere darin, dass die Dosiervorrichtung ein 2/2-Wegeventil aufweist, das in einer Förderleitung zwischen der Pumpe und einem ersten Niederdruckraum des Dosierventils angeordnet ist. Die erfindungsgemäße Dosiervorrichtung ist über das 2/2-Wegeventil schaltbar. Das 2/2-Wegeventil kennt nur zwei Zustände: Entweder es ist geöffnet oder es ist geschlossen.

Der nötige Druck für das flüssige Medium wird von der Pumpe, bevorzugt einer Vorförderpumpe, erzeugt, wobei an die Pumpe keine besonders hohen Anforderungen, insbesondere bezüglich eines Druckaufbaus, gestellt werden müssen. Die Pumpe sollte allerdings einen Förderdruck von ca. 9 bar aufbauen können. Da das 2/2-Wegeventil sowie die Pumpe einfach gebaute Bauteile sind, kann die Dosiervorrichtung preisgünstig hergestellt werden. Dabei kann das 2/2-Wegeventil integraler Bestandteil des Dosierventils sein; es kann aber auch über eine Leitung mit dem Dosierventil verbunden sein. Erfindungsgemäß ist vorgesehen, dass das Dosierventil mindestens einen Niederdruckraum und mindestens einen Hochdruckraum aufweist, und dass der Niederdruckraum und der Hochdruckraum von einem Kolben begrenzt sind. Dabei weisen die Kolben des mindestens einen Niederdruckraums und mindestens einen Hochdruckraums jeweils unterschiedliche Kobendurchmesser auf. Vorzugsweise ist der in Strömungsrichtung hinter der Pumpe bzw. hinter dem 2/2-Wegeventil erste Druckraum des Dosierventils der Niederdruckraum.

Zwischen dem Niederduckraum und dem Hochdruckraum ist ein (Stufen-)Kolben verschiebbar angeordnet. Der Teil des Kolbens, der den Niederdruckraum begrenzt, hat einen größeren Durchmesser als der Teil des Kolbens, der den Hochdruckraum begrenzt. Der (Stufen-)Kolben ist bevorzugt einteilig ausgeführt.

Durch die unterschiedlichen Kobendurchmesser wird eine hydraulische Druckübersetzung realisiert, die vorteilhafterweise sehr hohe Einspritzdrücke bei gleichzeitig hohen Fördermengen erzeugen kann. Der so erzeugbare Hochdruck dient zur Einspritzung des flüssigen Mediums in das Abgasrohr. Dabei kann das flüssige Medium zu sehr kleinen Tropfen zerstäubt und eine schnelle Gemischbildung mit einer hohen Güte, auch auf kürzesten Mischstrecken, erreicht werden. Zwischen dem Niederdruckraum und dem Hochdruckraum ist ein Rückschlagventil angeordnet.

Die Dosiervorrichtung, insbesondere das Dosierventil, ist eine relativ einfache Konstruktion, die keine besonderen Anforderungen an die Fertigungstechnik stellt. So können zum Beispiel alle Führungen in einem Arbeitsgang, ohne Umspannung, geschliffen werden. Daher ist die erfindungsgemäße Dosiervorrichtung kostengünstig in der Herstellung und zuverlässig im Betrieb.

Vorteilhaft ist auch, dass ein Fördervolumen der Dosiervorrichtung gleichbleibend ist. Dies wird primär durch definierte obere und untere Anschläge für den (Stufen-)Kolben im Niederdruckraum und/oder im Hochdruckraum bewirkt. Die Endanschläge legen das Fördervolumen konstruktiv fest. Damit ist die Einhaltung von vorgegebenen Abgasgrenzwerten im Abgasrohr sichergestellt werden. Außerdem ist das System OBD-2-fähig. Darunter versteht man die Fähigkeit, dass das SCR-System während des Betriebs der Brennkraftmaschine überwacht wird und somit die Funktionstüchtigkeit über die gesamte Lebensdauer der Brennkraftmaschine gewährleistet ist.

Vorteilhaft ist weiterhin, dass die Dosiervorrichtung mindestens eine auswechselbare Abstandsvorrichtung zur Bestimmung eines Kolbenhubs in mindestens einem Druckraum aufweist. Dabei kann z.B. mindestens ein Anschlag des Kolbens durch die auswechselbare Abstandsvorrichtung beaufschlagt werden, um den Kobenhub und damit die Fördermenge des flüssigen Mediums an unterschiedliche Brennkraftmaschinen bzw. Abgasvorrichtungen anzupassen und genau zu bestimmen. Es können durch unterschiedlich dicke Abstandsvorrichtungen auch toleranzbedingte Streuungen bei einer Serienfertigung ausgeglichen werden. Die Abstandsvorrichtung kann dabei bspw. als eine ringförmige Scheibe (z.B. eine sog. Restluftspaltscheibe) ausgebildet sein, die relativ zu einem fest angeordneten Anschlag im Innern des Dosierventils positioniert wird.

Die Scheibe kann auch derart am Gehäuse des Dosierventils anliegen, dass die Hubbewegung des Kolbens durch die Scheibe begrenzt wird. Durch die Wahl der Dicke der Scheibe kann der Kolbenhub entsprechend definiert werden, wobei ein Sortiment aus Scheiben mit unterschiedlicher Dicke eine Auswahl bietet, mit der das Fördervolumen von Dosierventilen gleicher Bauart leicht modifiziert und an unterschiedliche Brennkraftmaschinen bzw. Abgasvorrichtungen angepasst werden kann. Damit kann der Aufbau der Dosiervorrichtung standardisiert und weitestgehend in allen Abgasvorrichtungen eingesetzt werden.

In einer Ausgestaltung ist vorgesehen, dass die Dosiervorrichtung ein flüssiges Reduktionsmittel, z.B.Harnstoffwasserlösung, zur Stickoxidreduktion in den Abgasstrom einspritzt. Damit ist die erfindungsgemäße Dosiervorrichtung Teil eines bekannten Verfahrens zur selektiven katalytischen Reduktion (SCR). Das Dosierventil ist dabei in Abgasströmungsrichtung vor einem SRC-Katalysator angeordnet.

In einer weiteren Ausgestaltung ist alternativ oder zusätzlich vorgesehen, dass die Dosiervorrichtung bei Bedarf Dieselkraftstoff zur Partikelfilterregeneration in den Abgasstrom einspritzt. Damit ist die erfindungsgemäße Dosiervorrichtung Teil eines bekannten Verfahrens zur Entfernung von Rußpartikeln am Partikelfilter eines Dieselmotors. Das Dosierventil ist dazu stromaufwärts eines Oxidationskatalysators im Abgasrohr angeordnet.

Ferner ist vorteilhaft, dass ein Gehäuse des Dosierventils Kühlkanäle aufweist. Die Kühlkanäle sind dabei bevorzugt an den Tankrücklauf des flüssigen Mediums angeschlossen. Auf diese Weise kann die in einen Vorratstank zurückfließende Menge zur Kühlung verwendet werden.

Weitere Merkmale, Anwendungsmöglichkeiten und Vorteile der Erfindung ergeben sich aus der nachfolgenden Beschreibung eines Ausführungsbeispiels der Erfindung, das in der Zeichnung dargestellt ist. Dabei bilden alle beschriebenen oder dargestellten Merkmale für sich oder in beliebiger Kombination den Gegenstand der Erfindung. Es zeigen:
- Fig. 1: das Umfeld der Erfindung;
- Fig. 2: eine Dosiervorrichtung im Detail.

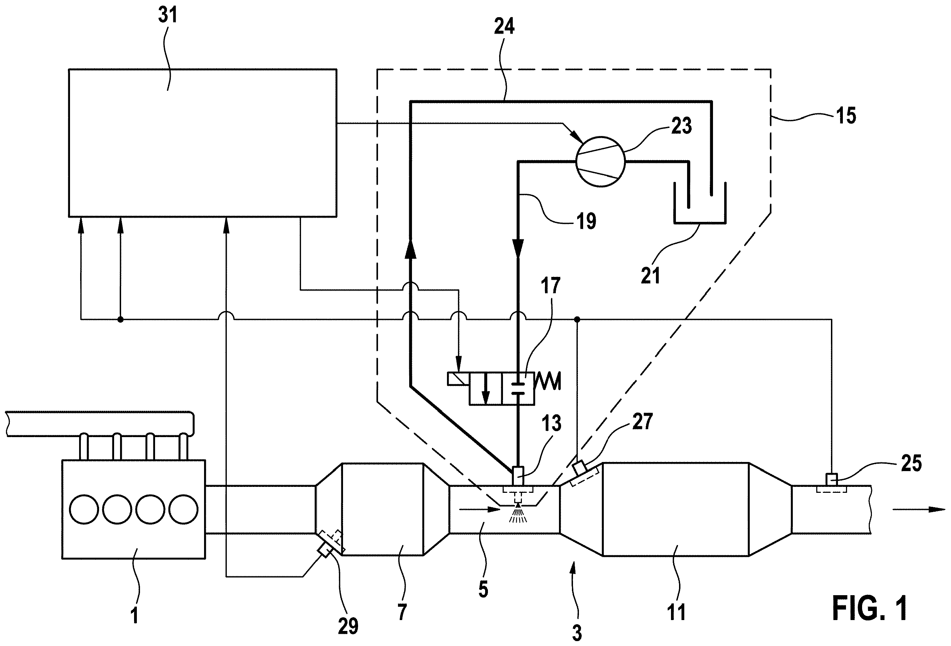

In Figur 1 ist eine Brennkraftmaschine 1 mit einer Abgasnachbehandlungseinrichtung 3 stark vereinfacht und schematisch dargestellt und zeigt das Umfeld der Erfindung. Die Abgasnachbehandlungseinrichtung 3 umfasst ein Abgasrohr 5, einen Oxidationskatalysator 7 und einen SCR-Katalysator 11 zur selektiven katalytischen Reduktion von gesundheitsschädlichem Stickoxid. Nicht dargestellt ist ein Partikelfilter, der üblicherweise stromabwärts des Oxidationskatalysators 7 angeordnet ist. Die Strömungsrichtung des Abgases durch das Abgasrohr 5 ist durch Pfeile (ohne Bezugszeichen) angedeutet.

Um den SCR-Katalysator 11 mit einem flüssigen Reduktionsmittel, z.B. einer Harnstoffwasserlösung oder einem anderen flüssigen Reduktionsmittel, zu versorgen, ist stromaufwärts des SCR-Katalysators 11 am Abgasrohr 5 ein Dosierventil 13 für die Harnstoffwasserlösung angeordnet. Das Dosierventil 13 spritzt bei Bedarf, z.B. wenn eine hohe Konzentration von Stickoxiden im Abgas ermittelt wird, die Harnstoffwasserlösung stromaufwärts des SCR-Katalysators 11 in das Abgasrohr 5 ein. Mit dem heißen Abgas entwickelt sich aus der Harnstoffwasserlösung Ammoniakgas, mit dem im SCR-Katalysator 11 das gesundheitsschädliche Stickoxid zu unschädlichem Wasser und Stickstoff reduziert wird.

Das Dosierventil 13 ist Teil einer Dosiervorrichtung 15. Die Dosiervorrichtung 15 umfasst darüber hinaus ein 2/2-Wegeventil 17, das in einer Förderleitung 19 zwischen einer Pumpe 23 und dem Dosierventil 13 angeordnet ist. Die Förderleitung 19 versorgt das Dosierventil 13 mit Harnstoffwasserlösung aus einem Vorratstank 21. Zum Fördern der Harnstoffwasserlösung weist die Förderleitung 19 zwischen dem 2/2-Wegeventil 17 und dem Vorratstank 21 eine Pumpe 23, vorzugsweise eine Vorförderpumpe, auf. Die Vorförderpumpe 23 sollte bevorzugt einen Förderdruck von ca. 9 bar erzeugen können. Außerdem ist am Dosierventil 13 für überschüssige Harnstoffwasserlösung eine Rücklaufleitung 24 in den Vorratstank 21 angeschlossen. Das 2/2-Wegeventil 17 kann - wie in Figur 1 dargestellt - in der Förderleitung 19 angeordnet sein, es kann aber auch im Dosierventil 13 integriert sein (Integriertes Dosiermodul IDM).

Der Vollständigkeit halber sei noch auf in der Abgasnachbehandlungseinrichtung 3 angeordnete Sensoren, nämlich einen Stickoxid-Sensor 25, sowie TemperaturSensoren 27 und 29, hingewiesen. Die hier gezeigten Sensoren stellen jedoch nur eine gewisse beispielhafte Auswahl dar, wobei im realen Betrieb noch weitere Sensoren im Bereich des Abgasrohrs 5 angeordnet sein können.

Die Sensoren 25, 27 und 29 sowie die Vorförder-Pumpe 23 und das 2/2-Wegeventil 17 sind über Signalleitungen (ohne Bezugszeichen) mit einem Steuergerät 31 verbunden. Das Steuergerät 31 kann auch mehrere und verteilt angeordnete Steuergeräte umfassen.

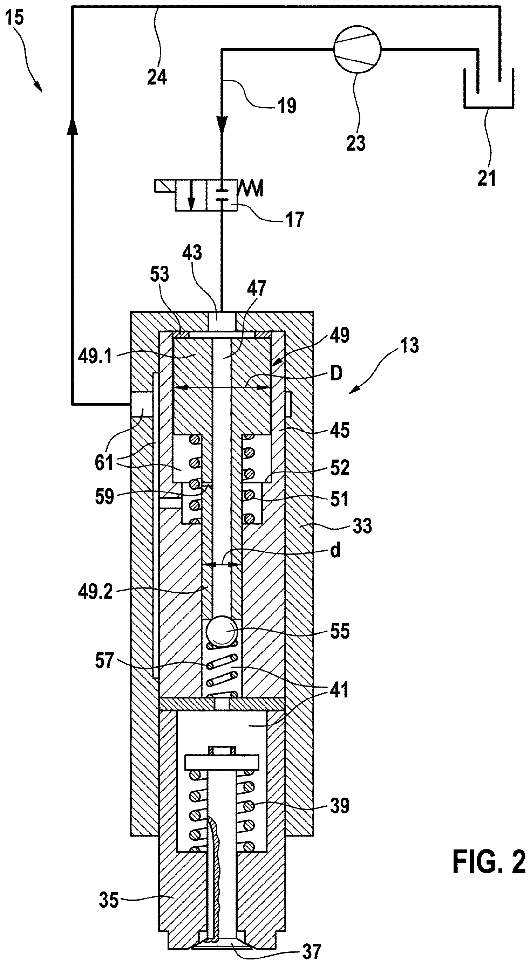

Figur 2 zeigt die Dosiervorrichtung 15, insbesondere das Dosierventil 13, im Detail. Das Dosierventil 13 ist von einem Gehäuse 33 umschlossen, aus dem ein Düsenkörper 35 herausragt.

In dem Düsenkörper 35 wird eine nach außen öffnende Düsennadel 37 geführt. Die Düsennadel 37 verschließt durch die Federkraft einer Düsenschließfeder 39 den Düsenkörper 35. Die Düsennadel 37 öffnet, wenn der Druck in einem Hochdruckraum 41 des Dosierventils 13 so groß ist, dass die auf die Düsennadel 37 wirkenden hydraulischen Kräfte größer als die in Schließrichtung auf die Düsennadel 37 wirkenden Kräfte der Düsenschließfeder 39 sind.

Zwischen dem Düsenkörper 35 und einem hydraulischen Anschluss 43 für die Förderleitung 19 umschließt das Gehäuse 33 einen Zylinder 45. Die Förderleitung 19 mündet unmittelbar hinter dem Anschluss 43 im Zylinder 45 in einen Niederdruckraum 47, der wiederum von einem hohlgebohrten Kolben 49 begrenzt wird. Der Hohlraum des Kolbens 49 ist Teil des Niederdruckraums 47.

Der Kolben 49 kann durch den Förderdruck in der Förderleitung 19 gegen die Federkraft einer Rückstellfeder 51 bewegt werden. Die Rückstellfeder 51 ist koaxial zu einem im Durchmesser reduzierten Abschnitt 49.2 des Kolbens 49 angeordnet. Eine Stufe im Zylinder 45 dient als Hubanschlag 52 für den Kolben 49.

Zwischen dem Anschluss 43 und dem Kolben 49 ist eine Restluftspaltscheibe 53 als Abstandshalter angeordnet, die fest im Innern des Gehäuses 33 angeordnet ist. Die Restluftspaltscheibe 53 begrenzt dabei die Hubbewegung des Kolbens 49. Durch die Dicke der Restluftspaltscheibe 53 kann ein Volumen des Niederdruckraums 47 bzw. ein möglicher Hub des Kolben 49 bei der Montage eingestellt werden.

Der Niederdruckraum 47 wird in dem Abschnitt 49.2 des Kolbens 49 durch eine Kugel 55 eines Rückschlagventils gegen den Hochdruckraum 41 verschlossen. Die Kugel 55 wird dabei gegen den Druck im Niederdruckraum 47 durch eine Druckfeder 57 gegen eine Öffnung des Niederdruckraums 47 gepresst. Die Kugel 55 ist somit das Ventilglied eines Rückschlagventils zwischen Niederdruckraum 47 und Hochdruckraum 41.

Ein Durchmesser D des Kolbens 49 im Niederdruckraum 47 im Bereich des Anschlusses 43 der Förderleitung 19 ist größer als der Durchmesse d des Kolbens 49, der den Hochdruckraum 41 mit Druck beaufschlagt. Dadurch kann in dem Dosierventil 13 durch den im Bereich des Anschlusses 43 wirkenden Förderdruck der Pumpe 23 eine hydraulische Druckübersetzung vom Niederdruckraum 47 zum Hochdruckraum 41 realisiert werden.

Durch eine im Abschnitt 49.2 des Kolbens 49 angeordnete Drossel 59 kann die Harnstoffwasserlösung über einen Rücklaufraum 61 in den Vorratstank 21 zurückgeführt werden.

Das Dosierventil 13 funktioniert folgendermaßen:

Das Dosierventil 13 wird über die Fördereitung 19 mit Harnstoffwasserlösung aus dem Vorratstank 21 versorgt. Das in der Förderleitung 19 angeordnete 2/2-Wegeventil 17 ist im Betrieb entweder geöffnet oder geschlossen. Die entsprechende Stellung wird vom Steuergerät 31 festgelegt.

Wird das 2/2-Wegeventil 17 geöffnet, so wird der Druck im Niederdruckraum 47 auf den von der Pumpe 23 erzeugten Vorförderdruck (ca. 9 bar) angehoben. Weil der Rücklaufraum 61 permanent mit dem Rücklauf in den Vorratstank 21 verbunden ist und Umgebungsdruck hat, wirkt im Niederdruckraum 47 auf den Kolben 49 eine resultierende Kraft. Diese drückt den Kolben 49 nach unten, was letztendlich eine Druckerhöhung der Harnstoffwasserlösung im Hochdruckraum 41 bewirkt.

Wird durch den aufgebauten Druck im Hochdruckraum 41 die Federkraft der Düsenschließfeder 39 überschritten, so öffnet die Düsennadel 37 gegen die Kraft der Düsenschließfeder 39 und die Harnstoffwasserlösung wird eingespritzt bis der Kolben 49 seinen unteren Hubanschlag 52 am Gehäuse 33 erreicht hat. Bei Erreichen der Endposition ist die Förderung in den Hochdruckraum 41 beendet.

Anschließend wird das 2/2-Wegeventil 17 geschlossen. Dadurch sinkt der Druck im Niederdruckraum 47 und im Hochdruckraum 41 und die Düsennadel 37 schließt.

Die Kraft der Rückstellfeder 51 drückt den Kolben 49 nach oben, bis er seine Endposition erreicht hat. Durch die Aufwärtsbewegung des Kolbens 49 sinkt der Druck im Hochdruckraum 41 unter das Druckniveau vom Niederdruckraum 47 und die Kugel 55 des Rückschlagventils öffnet. In dieser Phase wird der Hochdruckraum 41 mit dem verdrängten Volumen aus dem Niederduckraum 47 rückbefüllt. Aufgrund der Druckübersetzung wird im Niederdruckraum 47 mehr Volumen verdrängt als in Hochdruckraum 41 aufgefüllt werden kann. Die überschüssige Harnstoffwasserlösung wird über die Drossel 59 in die Rücklaufleitung 24 abgesteuert.

Das erfindungsgemäße Dosierventil 13 fördert mit jedem Hub des Kolbens 49 immer ein genau definiertes Volumen. Dies wird dadurch sicher gestellt, dass das 2/2-Wegeventil 17 länger geöffnet ist, als der Kolben 49 benötigt, um seinen maximalen Hub auszuführen. Auf diese Weise kann das Dosierventil 13 volumetrisch betrieben werden. Dadurch kann, bspw. im Zuge einer On-Board-Diagnose, ein Zeitpunkt zum Einspritzen der bekannten Fördermenge im Steuergerät 31 ermittelt und damit die Einhaltung von vorgegebenen Abgasgrenzwerten im Abgasrohr 5 sichergestellt werden. Der Hub des Druckübersetzers kann über die Dicke der Restluftspaltscheibe 53 exakt eingestellt werden, wobei die Restluftspaltscheibe 53 gleichzeitig die obere Endposition des Kolbenhubs darstellt.

In einer nicht dargestellten Ausgestaltung kann das Gehäuse 33 Kühlkanäle umfassen, die an die Rücklaufleitung 24 angeschlossen werden. Auf diese Weise kann die in den Vorratstank 21 zurückfliesende Menge an Harnstoffwasserlösung zur Kühlung verwendet werden.

In einer weiteren nicht dargestellten Ausgestaltung kann der Vorratstank 21 mit Dieselkraftstoff befüllt sein. Damit kann die Dosiervorrichtung 15 zur Regenration des Partikelfilters im Abgasrohr 5 verwendet werden. Insbesondere bei größeren Dieselmotoren ist bspw. stromaufwärts des Partikelfilters und des Oxidationskatalysators 7 ein Brenner vorgesehen, der bei Bedarf eine Flamme erzeugt, die dazu dient, den zusätzlich in das Abgas eingespritzten Kraftstoff zu verdampfen. Dieses Abgas-Kraftstoff-Gemisch reagiert im Oxidationskatalysator 7 stark exotherm. In Folge dessen erreicht das Abgas die zur Regeneration des Partikelfilters erforderliche hohe Temperatur. Das Dosierventil 13 ist dazu stromaufwärts des Oxidationskatalysators 7 im Abgasrohr 5 angeordnet. Diese Ausgestaltung kann zusätzlich oder alternativ zum Einspritzen von Harnstoffwasserlösung stromaufwärts des SRC-Katalysators 11 installiert sein.

## Patentansprüche

1. Abgasnachbehandlungseinrichtung (3) mit einer Dosiervorrichtung (15) zum Einbringen eines flüssigen Mediums in einen Abgasstrom einer Brennkraftmaschine (1) eines Kraftfahrzeugs, wobei die Dosiervorrichtung (15)
- eine Pumpe (23) zum Fördern des flüssigen Mediums aufweist und
- das Medium über ein Dosierventil (13) in den Abgasstrom eingespritzt wird,
wobei die Dosiervorrichtung (15)
- ein 2/2-Wegeventil (17) aufweist,
**dadurch gekennzeichnet, daß**
- das Dosierventil (13) mindestens einen Niederdruckraum (47) und mindestens einen Hochdruckraum (41) aufweist, wobei
- der Niederdruckraum (47) und der Hochdruckraum (41) von einem Kolben (49) begrenzt sind, wobei
- der Teil des Kolbens, der den Niederdruckraum begrenzt, einen größeren Durchmesser hat als der Teil des Kolbens, der den Hochdruckraum begrenzt, und wobei
- das 2/2-Wegeventil (17) in einer Förderleitung (19) zwischen der Pumpe (23) und dem Niederdruckraum (47) des Dosierventils (13) angeordnet ist.

2. Abgasnachbehandlungseinrichtung nach Anspruch 1, **dadurch gekennzeichnet, dass** ein Fördervolumen der Dosiervorrichtung (15) konstruktiv vorgegeben ist.

3. Abgasnachbehandlungseinrichtung nach einem der vorhergehenden Ansprüche, **dadurch gekennzeichnet, dass** die Dosiervorrichtung (15) mindestens eine auswechselbare Abstandsvorrichtung (53) zur Bestimmung eines Kolbenhubs in mindestens einem Druckraum (41; 47, 61) aufweist.

4. Abgasnachbehandlungseinrichtung nach einem der vorhergehenden Ansprüche, **dadurch gekennzeichnet, dass** das 2/2-Wegeventil (17) integraler Bestandteil des Dosierventils (13) ist.

5. Abgasnachbehandlungseinrichtung nach einem der Ansprüche 2 bis 4, **dadurch gekennzeichnet, dass** zwischen dem Niederdruckraum (47) und dem mindestens einen Hochdruckraum (41) ein Rückschlagventil (55, 57) angeordnet ist, dass das Rückschlagventil (55, 57) öffnet, wenn der Druck im Niederdruckraum (47) größer ist als der Druck im Hochdruckraum (41), und dass das Rückschlagventil (55, 57) schließt, wenn der Druck im Niederdruckraum (47) kleiner ist als der Druck im Hochdruckraum (41).

6. Abgasnachbehandlungseinrichtung nach einem der vorhergehenden Ansprüche, **dadurch gekennzeichnet, dass** die Dosiervorrichtung (15) ein flüssiges Reduktionsmittel zur Stickoxidreduktion in den Abgasstrom einspritzt.

7. Abgasnachbehandlungseinrichtung nach einem der vorhergehenden Ansprüche, **dadurch gekennzeichnet, dass** die Dosiervorrichtung (15) Dieselkraftstoff zur Partikelfilterregeneration in den Abgasstrom einspritzt.

8. Abgasnachbehandlungseinrichtung nach einem der vorhergehenden Ansprüche, **dadurch gekennzeichnet, dass** ein Gehäuse (33) des Dosierventils (13) Kühlkanäle aufweist.

9. Abgasnachbehandlungseinrichtung nach einem der vorhergehenden Ansprüche, **dadurch gekennzeichnet, dass** die Dosiervorrichtung (15) zur Einhaltung von vorgegebenen Abgasgrenzwerten in einem Abgasrohr (5) im Zuge einer On-Board-Diagnose einsetzbar ist.

## Claims

1. Exhaust-gas aftertreatment apparatus (3) having a dosing device (15) for introducing a liquid medium into an exhaust-gas stream of an internal combustion engine (1) of a motor vehicle, wherein the dosing device (15) has
- a pump (23) for delivering the liquid medium and
- the medium is injected into the exhaust-gas stream by means of a dosing valve (13),
wherein the dosing device (15) has
- a 2/2 directional valve (17),
**characterized in that**
- the dosing valve (13) has at least one low-pressure chamber (47) and at least one high-pressure chamber (41), wherein
- the low-pressure chamber (47) and the high-pressure chamber (41) are delimited by a piston (49), wherein
- the part of the piston which delimits the low-pressure chamber has a greater diameter than the part of the piston which delimites the high-pressure chamber, and wherein
- the 2/2 directional valve (17) is arranged in a delivery line (19) between the pump (23) and the low-pressure chamber (47) of the dosing valve (13).

2. Exhaust-gas aftertreatment apparatus according to Claim 1, **characterized in that** a delivery volume of the dosing device (15) is structurally predefined.

3. Exhaust-gas aftertreatment apparatus according to one of the preceding claims, **characterized in that** the dosing device (15) has at least one exchangeable spacer device (53) for defining a piston stroke in at least one pressure chamber (41; 47, 61).

4. Exhaust-gas aftertreatment apparatus according to one of the preceding claims, **characterized in that** the 2/2 directional valve (17) is an integral constituent part of the dosing valve (13).

5. Exhaust-gas aftertreatment apparatus according to one of Claims 2 to 4, **characterized in that** a check valve (55, 57) is arranged between the low-pressure chamber (47) and the at least one high-pressure chamber (41), **in that** the check valve (55, 57) opens when the pressure in the low-pressure chamber (47) is higher than the pressure in the high-pressure chamber (41), and **in that** the check valve (55, 57) closes when the pressure in the low-pressure chamber (47) is lower than the pressure in the high-pressure chamber (41).

6. Exhaust-gas aftertreatment apparatus according to one of the preceding claims, **characterized in that** the dosing device (15) injects a liquid reducing agent for nitrogen oxide reduction into the exhaust-gas stream.

7. Exhaust-gas aftertreatment apparatus according to one of the preceding claims, **characterized in that** the dosing device (15) injects diesel fuel for particle filter regeneration into the exhaust-gas stream.

8. Exhaust-gas aftertreatment apparatus according to one of the preceding claims, **characterized in that** a housing (33) of the dosing valve (13) has cooling ducts.

9. Exhaust-gas aftertreatment apparatus according to one of the preceding claims, **characterized in that** the dosing device (15) can be used for adherence to predefined exhaust-gas limit values in an exhaust pipe (5) within the context of on-board diagnosis.

## Revendications

1. Dispositif de post-traitement de gaz d'échappement (3) doté d'un dispositif de dosage (15) pour l'introduction d'un fluide liquide dans un flux de gaz d'échappement d'un moteur à combustion interne (1) d'un véhicule automobile, dans lequel
- le dispositif de dosage (15) présente une pompe (23) pour le transport du fluide liquide et
- le fluide est injecté dans le flux de gaz d'échappement au moyen d'une soupape de dosage (13),
dans lequel le dispositif de dosage (15)
- présente une vanne à 2/2 voies (17),
**caractérisé en ce que**
- la soupape de dosage (13) présente au moins une chambre basse pression (47) et au moins une chambre haute pression (41), dans lequel
- la chambre basse pression (47) et la chambre haute pression (41) sont limitées par un piston (49), dans lequel
- la partie du piston, qui limite la chambre basse pression, présente un plus grand diamètre que la partie du piston, qui limite la chambre haute pression, et dans lequel
- la vanne à 2/2 voies (17) est disposée dans une conduite de transport (19) entre la pompe (23) et la chambre basse pression (47) de la soupape de dosage (13) .

2. Dispositif de post-traitement de gaz d'échappement selon la revendication 1, **caractérisé en ce qu'**un volume de transport du dispositif de dosage (15) est prédéterminé par construction.

3. Dispositif de post-traitement de gaz d'échappement selon l'une quelconque des revendications précédentes, **caractérisé en ce que** le dispositif de dosage (15) présente au moins un dispositif d'écartement interchangeable (53) pour la détermination d'une course de piston dans au moins une chambre de pression (41; 47, 61).

4. Dispositif de post-traitement de gaz d'échappement selon l'une quelconque des revendications précédentes, **caractérisé en ce que** la vanne à 2/2 voies (17) fait partie intégrante de la soupape de dosage (13).

5. Dispositif de post-traitement de gaz d'échappement selon l'une quelconque des revendications 2 à 4, **caractérisé en ce qu'**une soupape antiretour (55, 57) est disposée entre la chambre basse pression (47) et ladite au moins une chambre haute pression (41), **en ce que** la soupape antiretour (55, 57) s'ouvre lorsque la pression dans la chambre basse pression (47) est supérieure à la pression dans la chambre haute pression (41), et **en ce que** la soupape antiretour (55, 57) se ferme lorsque la pression dans la chambre basse pression (47) est inférieure à la pression dans la chambre haute pression (41).

6. Dispositif de post-traitement de gaz d'échappement selon l'une quelconque des revendications précédentes, **caractérisé en ce que** le dispositif de dosage (15) injecte un agent réducteur liquide dans le flux de gaz d'échappement afin de réduire les oxydes d'azote.

7. Dispositif de post-traitement de gaz d'échappement selon l'une quelconque des revendications précédentes, **caractérisé en ce que** le dispositif de dosage (15) injecte du carburant diesel dans le flux de gaz d'échappement en vue de la régénération du filtre à particules.

8. Dispositif de post-traitement de gaz d'échappement selon l'une quelconque des revendications précédentes, **caractérisé en ce qu'**un boîtier (33) de la soupape de dosage (13) présente des canaux de refroidissement.

9. Dispositif de post-traitement de gaz d'échappement selon l'une quelconque des revendications précédentes, **caractérisé en ce que** le dispositif de dosage (15) peut être utilisé dans le cadre d'un diagnostic embarqué pour le respect de valeurs limites prédéterminées du gaz d'échappement dans un tuyau à gaz d'échappement (5) .
